# EUROPEAN PATENT APPLICATION

(11) **EP 4 703 987 A1**
(43) Date of publication of application: **04.03.2026**
(21) Application number: 24197247.0
(22) Date of filing: 29.08.2024
(51) Int. Cl.: G06Q 10/06, G06Q 10/0631, G06Q 10/10

(54) **COMPUTER-IMPLEMENTED METHOD AND COMPUTER-IMPLEMENTED DEVICE FOR PRODUCING A PRODUCT BY A LIFECYCLE PROCESS USING USER EXPERIENCE**

(71) Applicant: Siemens Aktiengesellschaft, 80333 München (DE)
(72) Inventor: Gronau, Claus, 34439 Willebadessen Niesen (DE); Röse, Kerstin, 91056 Erlangen (DE); Schumm, Bernhard, 81927 München (DE)
(74) Representative: Siemens Patent Attorneys

(57) **Abstract**

The invention relates to a computer-implemented method for producing a product (P) by a lifecycle process (1) using User Experience, UX, the computer-implemented method comprising: providing (S1) a plurality N1 of building blocks (201-209) and a plurality N2 of activities (301-331), each of the activities (301-331) being related to a certain aspect of the UX related to the product (P), the respective building block (201-209) being defined by a building block description, the respective building block description at least including a target state of the building block (201-209), a set of the N2 activities (301-331) allocated to the building block (201-209), and a number of results being attainable by said set of activities (301-331), providing (S2) a software tool (T) including a network (2) with N3 nodes, with N3=N1+N2, each of the N3 nodes representing one of the N1 building blocks (201-209) or one of the N2 activities (301-331), wherein a number of activities (301-331) being allocated to at least two different building blocks (201-209) are connected by a number of edges in the network (2), and applying (S3) the provided software tool (T) in the lifecycle process (1) of the product (P) for generating at least one signal (S) being adapted for adapting the product (P) and/or the lifecycle process (1) of the product (P).

## Description

The present invention relates to a computer-implemented method for producing a product by a lifecycle process using User Experience (UX). Further, the present invention relates to a computer program product, to a computer readable medium, and to a computer-implemented device for producing a product by a lifecycle process using UX.

In industry, a lifecycle process of a product is the process of managing the entire lifecycle of a product from its inception through the engineering, design, and manufacture, as well as the service and disposal of the manufactured product. Thus, a lifecycle process may include different stages, e.g. inter-alia including Systems Engineering (SE), Product and Portfolio Management (PPM), Product design, Manufacturing Process Management (MPM), and Product Data Management (PDM).

These stages may be interrelated to each other and may be used and operated by different users or operators. So far, there is no solution for integrating the different user experiences of the different users or operators of the different stages in the whole lifecycle process of the product.

It is one object of the present invention to improve producing a product.

According to a first aspect, a computer-implemented method for producing a product by a lifecycle process using User Experience, UX, is suggested. The computer-implemented method comprises:
providing a plurality N1 of building blocks and a plurality N2 of activities, each of the activities being related to a certain aspect of the UX related to the product, the respective building block being defined by a building block description, the respective building block description at least including a target state of the building block, a set of the N2 activities allocated to the building block, and a number of results being attainable by said set of activities,
providing a software tool including a network with N3 nodes, with N3=N1+N2, each of the N3 nodes representing one of the N1 building blocks or one of the N2 activities, wherein a number of activities being allocated to at least two different building blocks are connected by a number of edges in the network, and
applying the provided software tool in the lifecycle process of the product for generating at least one signal being adapted for adapting the product and/or the lifecycle process of the product.

The activities of an allocated building block are adapted to achieve the target being defined for the respective building block. By means of the present method, activities being allocated to different building blocks are interrelated to each other for improving the production of the product, said interrelations are realized by said number of edges in the network between said activities of different building blocks. Therefore, all possible interrelations between the activities of the building blocks are presently considered, even across the borders of the building blocks.

Thus, the production of the product is improved, in particular in terms of improved product quality and reliability, reduced prototyping costs, more accurate and timely requests of the different operators of the realization team and/or the lifecycle teams, savings through the re-use of data of different building blocks, savings through the complete integration of the workflows of the lifecycle process, maximizing supply chain collaboration, reduction of development resources, faster time-to-market of the product and/or less service requests for the product.

In particular, user experience (UX) includes all touchpoints and interactions that the user (or operator or stakeholder) has on producing the product including engineering, design, manufacturing and/or offering the product, before, during and after use. Aspects for a positive user experience may include the satisfaction of the stakeholders in whether they can achieve their usage goals as easily as possible.

The product may be a hardware product or a software product. An example for a hardware product may be a wind turbine. An example for a software product may be a control software for controlling a wind turbine. As a further example, the product may be an application (app) running on a server or computer.

According to an embodiment, the network has a tree topology, wherein the nodes representing the N1 building blocks are arranged at an upper level in the tree and the N2 activities are arranged at a lower level in the tree.

Particularly, the network may be referred to as a network tree having a first layer defining the theme, here UX, a second layer at which the nodes representing the building blocks are arranged, and a third layer where the nodes representing the activities are arranged. In embodiments, the activities may be embodied as data blocks allocated to the respective building block.

According to a further embodiment, the lifecycle process is an end-to-end lifecycle process, wherein the N1 building blocks are allocated to different stages in the end-to-end lifecycle process. As mentioned, the end-to-end lifecycle process may include different stages, wherein the different building blocks are distributed over said stages.

According to a further embodiment, the building block description of the respective building block includes a target state for the building block, an information indicating consequences of no response, an indication for which stakeholders the building block is a applicable for, preconditions, the activities allocated to the building block, the number of results being attainable by the set of activities allocated to the building block, a trigger for the building block, a deadline for the building block, an information indicating a contribution and/or competences of the building block.

The target state may define the target achievable by the building block using the activities allocated to said building block. The information indicating consequences of no response defines the building block specific consequences of failing any response. Examples of consequences of no response include the risk of providing a product with non-optimal user experience and the danger of lower user acceptance. The indication for which stakeholders the building block is applicable for particularly gives a definition for the respective stakeholders of the respective building block. Preconditions may be also referred to as assumptions allocated to the building block. Examples for such preconditions may include an in-depth understanding of the users, their needs and context. The activities allocated to the building block are defined to be configured to achieve the target of the allocated building block. The trigger for the building block may be an event in the lifecycle process triggering said building block. The deadline for the building block may be defined as a due date the building block has to be done by the certain operator responsible for the building block.

According to a further embodiment, the lifecycle process includes a lifecycle stream and a realization stream. In particular, each of the N1 building blocks is allocated to the lifecycle stream or to the realization stream.

According to a further embodiment, the building blocks allocated to the lifecycle stream include a UX Research building block, a UX Analysis building block, a UX framework building block, a User Behaviour building block, and/or a UX Strategy building block.

The UX Research building block may also be referred to as UX Research. The UX Research may be helpful to gain knowledge about the users and their needs, motivations, goals, and behaviour. The UX Research may form a significant foundation for UX and product strategy. The consequences of no response of UX Research may include a missing understanding of the problems of the users and a missing knowledge about their market needs. The results of the UX Research may include identified potential of needed improvements, understood user needs, opportunities for offerings and innovation and/or considered accessibility aspects. Activities allocated to the UX Research may include explore context of use, perform UX research and perform data analysis. For example, explore context of use may include on-site visits and desktop research. The activity to perform UX Research may include stakeholder analysis, workshops, and interviews. The activity to perform data analysis may include process analysis, including identifying patterns or correlations between behaviours, benchmarking, and scoping.

The UX Analysis building block may be also referred to as UX Analysis. In UX Analysis, UX requirements may be ranked and validated. The UX Analysis methods reveal patterns and transient user behaviour. UX Analysis may help to identify painpoints and friction areas with the user journey which leads to user-centric product enhancements. This may be helpful for getting a clear understanding of the product scope. Consequences of no response for UX Analysis may include a risk of spending too much effort on features with no priority or even wrong features. The results of UX Analysis may include that prioritized and validated user requirements are documented, e.g. a stakeholder map, a value proposition, and a task model. Activities allocated to UX Analysis may include to analyze stakeholder needs, to perform process analysis, to provide insights and to prioritize stakeholder needs.

The UX Framework building block may also be referred to as UX Framework or generic UX Framework. The UX Framework may ensure the consistent user experience among all offerings from the portfolio leading to high customer value. The consequences of no response of UX Framework may include a risk of providing products and solutions with a lower user experience and a danger of low user acceptance. The results of UX Framework may include an overall UX concept being available and available frameworks. The activities allocated to UX Framework may include to create a holistic UX concept, to create a concept representation and to define and adapt frameworks.

The User Behaviour building block may be referred to user feedback/user behaviour/user participation. The User Feedback may allow the measuring of user satisfaction and a more precise troubleshooting. The collected user feedback establishes a database for the incremental development and the generation of new ideas. It provides the confirmation of UX concepts in different contexts. Thus, User Feedback may ensure market observation in real-time leading to optimize the user experiences. The results of User Behaviour may include regular reports of user satisfaction and product performance. The activities of the User Behaviour building block may include to track user behaviour, to evaluate offering, to perform expert evaluation and to evaluate the user feedback.

The UX Strategy building block may be referred to as UX Strategy. An overall UX Strategy may ensure the ability of an organization producing the product to address the aspect of the user experience adequately. The UX Strategy may allow the monitoring and the validation of defined UX KPls, to verify the impact of UX KPls on organization and business, and the effectiveness of the overall UX activities. The results of UX Strategy may include a tool set for UX methods defined, a defined UX roadmap, input for UX-related quality requirements and/or UX process quality defined. Activities allocated to a UX Strategy may include to define UX visions, to define goals and measures and to plan a monitor UX roadmap.

According to a further embodiment, the building blocks allocated to the realization stream include a UX Concept building block, a UX Specification building block, a UX Evaluation building block, and/or a UX Management building block.

The UX Concept building block may be also referred to as UX Concept. The UX Concept building block may describe what the respective operator may experience and what means can be used to achieve a positive user experience. The UX Concept may be validated and aligned with the product strategy of the product. Activities allocated to the UX Concept building block may include to create concepts, to defined flowcharts, to detail concepts and/or to perform high-level prototyping.

The UX Specification building block may be referred to UX Specification. The UX Specification documents the reasons behind the different UX elements. The UX Specification may help to increase user acceptance and creates user value. The results of UX Specification may include a validated user interface design, e.g. user interface patterns, an applied style guide, an icon list and a specified user experience design. Activities allocated to a UX Specification may include to specify UI design, to perform prototyping and to communicate UI designs and solutions.

The UX Evaluation building block may be referred to as UX Evaluation. The use of UX Evaluation may help to gain increased insight in the user process and workflows and thus ultimately provides a better user acceptance. In consequence, it may lead to a reduction of realization costs in time. The results of UX Evaluation may include an adequate documentation of user evaluations and an availability of explicit user reactions to testing objects and generated new ideas. Activities allocated to the UX Evaluation may include to perform concept evaluation, to perform exert evaluation, to execute UX tests and/or to execute user acceptance tests.

The UX Management building block may be referred to as UX Management. The UX Management may help to align different UX-related views among the stakeholders. It may ensure high quality and efficiency of user experience for offering as well as a harmonization of product experience. UX Management may ensure an adequate guidance for UX activities and a balanced ratio of UX resources. The results of UX Management may include UX-related parts of the project plan for the product, UX process quality validated, an established tracing model and a UX-related "definition of done". Activities allocated to UX Management may include to select UX team, to plan UX and to monitor and evaluate UX.

According to a further embodiment, the respective building block includes a first indication for UX Competence Cluster, a second indication for UX Role and a third indication for UX Competence.

According to a further embodiment, the UX Research building block includes as allocated activities an activity to explore context of use, an activity to perform UX Research, and an activity to perform data analysis.

According to a further embodiment, the UX Analysis building block includes as allocated activities an activity to analyze stakeholder needs, an activity to transfer stakeholder needs to team, an activity to perform process analysis, an activity to prioritize stakeholder needs and an activity to provide insights.

According to a further embodiment, the UX Framework building block includes as allocated activities an activity to create holistic UX concepts, an activity to create concept representations, and an activity to define and adapt frameworks.

According to a further embodiment, the UX Concept building block includes as allocated activities an activity to create concepts, an activity to define flowcharts, an activity to detail concepts, and an activity to perform high level prototyping.

According to a further embodiment, the UX Evaluation building block includes an activity to perform concept evaluation, an activity to execute UX tests, an activity to execute user acceptance tests and an activity to perform expert evaluations.

According to a further embodiment, the UX specification building block includes as allocated activities an activity to specify UI designs, an activity to perform prototyping, and an activity to communicate UX designs and solutions.

According to a further embodiment, the UX strategy building block includes as allocated activities an activity to define UX visions, an activity to define goals and measures, and an activity to plan and monitor UX roadmaps.

According to a further embodiment, the User Behaviour building block includes as allocated activities an activity to track user behaviour, an activity to evaluate offering, and an activity to evaluate user feedback.

According to a further embodiment, the UX management building block includes as allocated activities an activity to select a UX team, an activity to plan UX and an activity to monitor and evaluate UX.

According to a further embodiment, the activity to analyze stakeholder needs of the UX analysis building block uses the output of the activity to perform data analysis of the UX research building block.

According to a further embodiment, the activity to create concepts of the UX concept building block uses the output of the activity to provide insights of the UX analysis building block and the output of the activity to define and adapt frameworks of the UX Framework building block.

According to a further embodiment, the activity to perform concept evaluation of the UX Evaluation building block uses the output of the activity to perform high level prototyping of the UX Concept building block.

According to a further embodiment, the activity to specify UI designs and the activity to perform prototyping of the UX specification building block both use the output of the activity to perform high level prototyping of the UX Concept building block.

According to a further embodiment, the activity to execute UX tests and the activity to execute user acceptance tests of the UX Evaluation building block both use the output of the activity to communicate UX designs and solutions of the UX Specification building block.

According to a further embodiment, the activity to define UX visions of the UX Strategy building block uses the output of the activity to perform data analysis of the UX Research building block.

According to a further embodiment, the activity to perform expert evaluation of the UX Evaluation building block uses the output of the activity to perform high level prototyping of the UX Concept building block.

According to a further embodiment, the activity to evaluate user feedback of the User Behaviour building block uses the output of the activity to perform expert evaluation of the UX Evaluation building block, and the output of the activity to evaluate offering of the User Behaviour building block.

According to a further embodiment, the computer-implemented method further comprises a step of manufacturing the product using the signal generated by the software tool.

According to a further embodiment, the lifecycle process includes an input stage for receiving inputs related to the product, a consecutive selection stage for selecting demands from the received inputs, a consecutive stage for the realization stream for producing the product, a consecutive output stage for delivering the product, and a feedback branch coupling the output stage with the input stage.

According to a further embodiment, the stages and the feedback branch are based on the lifecycle stream, wherein the UX Analysis building block is allocated to the selection stage, wherein the UX Concept building block, the UX Evaluation building block, the UX Specification block and the UX Management building block are allocated to the realization stream, wherein the UX Research building block and the User Behaviour building block are allocated to the feedback branch, and/or wherein the Generic UX Framework building block and the UX Strategy building block are allocated to the lifecycle stream.

Any embodiment of the first aspect may be combined with any embodiment of the first aspect to obtain another embodiment of the first aspect.

According to a second aspect, a computer program product is suggested, the computer program product comprising a program code for executing the computer-implemented method according to the first aspect or according to an embodiment of the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a computer readable medium is suggested on which program code sections of a computer program are saved, the program code sections being loadable into and/or executable in a system to make the system execute the method steps according to the first aspect or according to an embodiment of the first aspect when the program code sections are executed in the system.

According to a fourth aspect, a computer-implemented device for producing a product by a lifecycle process using User Experience, UX, is suggested. The computer-implemented device comprises:
a first unit for providing a plurality N1 of building blocks and a plurality N2 of activities, each of the activities being related to a certain aspect of the UX related to the product, the respective building block being defined by a building block description, the respective building block description at least including a target state of the building block, a set of the N2 activities allocated to the building block, and a number of results being attainable by said set of activities,
a second unit for providing a software tool including a network with N3 nodes, with N3=N1+N2, each of the N3 nodes representing one of the N1 building blocks or one of the N2 activities, wherein a number of activities being allocated to at least two different building blocks are connected by a number of edges in the network, and
a third unit for applying the provided software tool in the lifecycle process of the product for generating at least one signal being adapted for adapting the product and/or the lifecycle process of the product.

The respective unit, e.g. the first unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

The embodiments and features described with reference to the method of the present invention apply mutatis mutandis to the device of the present invention.

Further possible implementations or alternative solutions of the invention also encompass combinations - that are not explicitly mentioned herein - of features described above or be-low with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic flow chart of an embodiment of a computer-implemented method for producing a product by a lifecycle process using User Experience;
Fig. 2 shows a schematic block diagram of an embodiment of a lifecycle process for a product using User Experience;
Fig. 3 shows a knowledge graph illustrating a representation of a network of the software tool used by the computer-implemented method of Fig. 1; and
Fig. 4 shows a schematic block diagram of an embodiment of a computer-implemented device for producing a product by a lifecycle process using User Experience.

In the Figures, like reference numerals designate like or functionally equivalent elements, unless otherwise indicated.

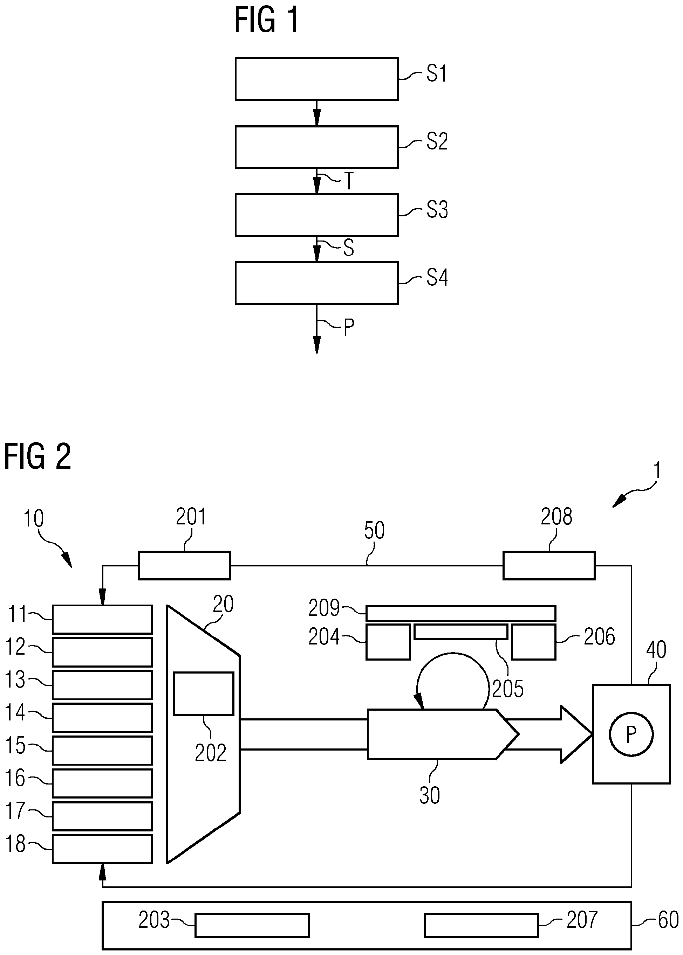

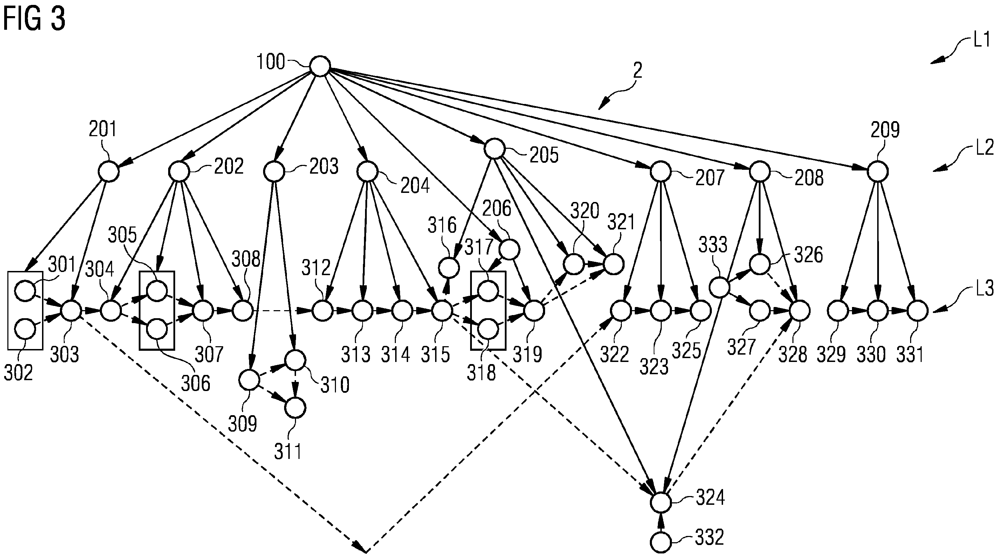

In Fig. 1, a schematic flow chart of an embodiment of a computer-implemented method for producing a product P by a lifecycle process 1 using User Experience (UX) is depicted. The method of Fig. 1 includes the method steps S1 - S4 and is discussed with reference to Fig. 2 and Fig. 3. In this regard, Fig. 2 shows a schematic block diagram of an embodiment of a lifecycle process 1 for a product P using UX, and Fig. 3 shows a knowledge graph illustrating a representation a network 2 of the software tool T used by the computer-implemented method of Fig. 1.

As mentioned, Fig. 1 includes the method steps S1 - S4:

In step S1, a plurality N1 of building blocks 201-209 and a plurality N2 of activities 301-331 are provided. Each of the activities 301-331 is related to a certain aspect of the UX related to the product P. The respective building block 201-209 is defined by a building block description. Without loss of generality, in the examples of Figs. 1 to 3, N1 = 9.

The respective building block description includes at least a target state of the building block 201-209, a set of the N2 activities 301-331 allocated to the building block 201-209, and a number of results being attainable by said set of activities 301-331.

In embodiments, the building block description of the respective building block 201-209 may include a target state for the building block 201-209, an information indicating consequences of no response, an indication for which stakeholders the building block 201-209 is a applicable for, preconditions for the building block, the activities 301-331 allocated to the building block 201-209, the number of results being attainable by the set of activities 301-331 allocated to the building block 201-209, a trigger for the building block 201-209, a deadline for the building block 201-209, an information indicating a contribution and/or competences of the building block 201-209.

With respect to Fig. 2, the lifecycle process 1 is an end-to-end lifecycle process, wherein the N1 building blocks 201-209 are allocated to different stages in the end-to-end lifecycle process1. As further shown in Fig. 2, the lifecycle process 1 includes a lifecycle stream 60 and a realization stream 30, wherein each of the N1 building blocks 201-209 is allocated to the lifecycle stream 60 or to the realization stream 30.

In particular, the building blocks 201-209 allocated to the lifecycle stream 60 include a UX Research building block 201, a UX Analysis building block 202, a UX framework building block 203, a User Behaviour building block 208, and a UX Strategy building block 207. Moreover, the building blocks 201-209 allocated to the realization stream 30 include a UX Concept building block 204, a UX Specification building block 206, a UX Evaluation building block 205, and a UX Management building block 209.

Furthermore, the respective building block 201-209 may include a first indication for UX Competence Cluster, a second indication for UX Role and a third indication for UX Competence.

From a further perspective, the end-to-end lifecycle process 1 may include an input stage 10 for receiving inputs 11-18 related to the product P, a consecutive selection stage 20 for selecting demands from the received inputs 11-18, a consecutive stage 30 for the realization stream for producing the product P, a consecutive output stage 40 for delivering the product P, and a feedback branch 50 coupling the output stage 40 with the input stage 10.

For example, the inputs 11-18 may include customer inputs 11, technology-related inputs 12, idea- and/or concept-related ideas 13, inputs related to standards and regulations 14, inputs related to strategy 15, inputs related to operation 16, inputs related to sales/market 17 and data inputs 18. In the consecutive selection stage 20 for selecting demands from the received inputs 11-18, the inputs 11-18 may also be prioritized and/or weighted. Even more, the consecutive stage 20 may manage a ranked backlog of the selected demands. The consecutive stage 30 for the realization stream for producing the product P may be operated by a realization team. In the output stage 40, the product P may be delivered to a customer. The product P may be a hardware product or a software product, for example. An example for a hardware product may be a wind turbine, and a software product may be a control software for controlling a wind turbine, for example. The feedback branch 50 may be configured to deliver customer feedback and marketing needs back to the input stage 10.

As Fig. 2 illustrates, the realization stream may be part of stage 30, wherein the feedback branch 50 and all stages 10-40 may be based on the lifecycle stream 60.

As mentioned, each of the N1 building blocks 201-209 is allocated to the lifecycle stream 60 or to the realization stream 30. For example, the UX Analysis building block 202 is allocated to the selection stage 20. The UX Concept building block 204, the UX Evaluation building block 205, the UX Specification block 206 and the UX Management building block 209 are allocated to the realization stream 30. The UX Research building block 201 and the User Behaviour building block 208 are allocated to the feedback branch 50. The Generic UX Framework building block 203 and the UX Strategy building block 207 are allocated to the lifecycle stream 60.

For example, with respect to Fig. 3 illustrating a knowledge graph with the theme UX 100 of the network 2 of the software tool T of Fig. 1, the UX Research building block 201 may include as allocated activities an activity to explore context of use 301, an activity to perform UX Research 302, and an activity to perform data analysis 303.

For example, the UX Analysis building block 202 includes as allocated activities an activity to analyze stakeholder needs 304, an activity to transfer stakeholder needs to team 305, an activity to perform process analysis 306, an activity to prioritize stakeholder needs 307 and an activity to provide insights 308.

For example, the UX Framework building block 203 includes as allocated activities an activity to create holistic UX Concepts 309, an activity to create concept representations 310, and an activity to define and adapt frameworks 311.

Further, the UX Concept building block 204 includes as allocated activities an activity to create concepts 312, an activity to define flowcharts 313, an activity to detail concepts 314, and an activity to perform high level prototyping 315.

For example, the UX Evaluation building block 205 includes an activity to perform concept evaluation 316, an activity to execute UX tests 320, an activity to execute user acceptance tests 321 and an activity to perform expert evaluations 324.

Moreover, the UX specification building block 206 includes as allocated activities an activity to specify Ul designs 317, an activity to perform prototyping 318, and an activity to communicate UX designs and solutions 319.

For example, the UX strategy building block 207 includes as allocated activities an activity to define UX visions 322, an activity to define goals and measures 323, and an activity to plan and monitor UX roadmaps 325.

Furthermore, the User Behaviour building block 208 includes as allocated activities an activity to track user behaviour 326, an activity to evaluate offering 327, and an activity to evaluate user feedback 328.

For example, the UX management building block 209 includes as allocated activities an activity to select a UX team 329, an activity to plan UX 330 and an activity to monitor and evaluate UX 331.

In step S2, a software tool T is provided, the software tool T including a network 2 with N3 nodes as exemplarily shown in Fig. 3. As shown in Fig. 3, N3=N1+N2, and each of the N3 nodes represents one of the N1 building blocks 201-209 or one of the N2 activities 301-331. Furthermore, reference signs 401 and 402 in Fig. 3 indicate that the associated activities 324, 326, 327 are cyclic tasks.

As further shown in Fig. 3, a number of activities 301-331 allocated to at least two different building blocks 201-209 are connected by a number of edges in the network 2. For example, the activity to analyze stakeholder needs 304 of the UX analysis building block 202 uses the output of the activity to perform data analysis 303 of the UX research building block 201. The activity to create concepts 312 of the UX concept building block 204 uses the output of the activity to provide insights 308 of the UX analysis building block 202 and the output of the activity to define and adapt frameworks 311 of the UX Framework building block 203. The activity to perform concept evaluation 316 of the UX Evaluation building block 205 uses the output of the activity to perform high level prototyping 315 of the UX Concept building block 204. The activity to specify UI designs 317 and the activity to perform prototyping 318 of the UX specification building block 206 both use the output of the activity to perform high level prototyping 315 of the UX Concept building block 204.

The activity to execute UX tests 320 and the activity to execute user acceptance tests 321 of the UX Evaluation building block 205 both use the output of the activity to communicate UX designs and solutions 319 of the UX Specification building block 206. The activity to define UX visions 322 of the UX Strategy building block 207 uses the output of the activity to perform data analysis 303 of the UX Research building block 201. The activity to perform expert evaluation 324 of the UX Evaluation building block 205 uses the output of the activity to perform high level prototyping 315 of the UX Concept building block 204. The activity to evaluate user feedback 328 of the User Behaviour building block 208 uses the output of the activity to perform expert evaluation 324 of the UX Evaluation building block 205. Moreover, the output of the activity to evaluate offering 327 of the User Behaviour building block 208.

Thus, activities 301- 331 being allocated to different building blocks 201-209 are interrelated to each other for improving the production of the product P, said interrelations are realized by said number of edges in the network 2 between said activities 301- 331 of different building blocks 201-209. Therefore, all possible interrelations between the activities 301- 331 of the building blocks 201-209 are presently considered, even across the borders of the building blocks 201-209.

In step S3, the provided software tool T is applied in the lifecycle process 1 of the product P for generating at least one signal S being adapted for adapting the product P and/or the lifecycle process 1 of the product.

In step S4, the product P is manufactured using the signal S generated by the software tool T.

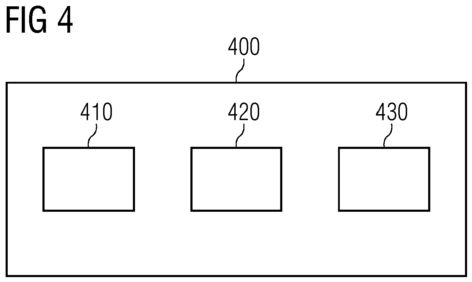

Fig. 4 shows a schematic block diagram of an embodiment of a computer-implemented device 400 for producing a product P by a lifecycle process 1 using User Experience (UX).

The computer-implemented device 400 comprises a first unit 410, a second unit 420, and a third unit 430.

The first unit 410 is configured to provide a plurality N1 of building blocks 201-209 and a plurality N2 of activities 301-331, each of the activities 301-331 being related to a certain aspect of the UX related to the product P, the respective building block 201-209 being defined by a building block description, the respective building block description at least including a target state of the building block 201-209, a set of the N2 activities 301-331 allocated to the building block 201-209, and a number of results being attainable by said set of activities 301-331.

The second unit 420 is configured to provide a software tool T including a network 2 with N3 nodes, with N3=N1+N2, each of the N3 nodes representing one of the N1 building blocks 201-209 or one of the N2 activities 301-331, wherein a number of activities 301-331 being allocated to at least two different building blocks 201-209 are connected by a number of edges in the network 2.

The third unit 430 for applying the provided software tool T in the lifecycle process 1 of the product P for generating at least one signal S being adapted for adapting the product P and/or the lifecycle process 1 of the product P.

In embodiments, the computer-implemented device 400 may include a fourth unit (not shown). The fourth unit is configured to manufacture the product P using the signal S generated by the software tool T.

Although the present invention has been described in accordance with preferred embodiments, it is obvious for the person skilled in the art that modifications are possible in all embodiments. Independent of the grammatical term usage, individuals with male, female or other gender identities are included within the term.

## Claims

1. A computer-implemented method for producing a product (P) by a lifecycle process (1) using User Experience, UX, the computer-implemented method comprising:
providing (S1) a plurality N1 of building blocks (201-209) and a plurality N2 of activities (301-331), each of the activities (301-331) being related to a certain aspect of the UX related to the product (P), the respective building block (201-209) being defined by a building block description, the respective building block description at least including a target state of the building block (201-209), a set of the N2 activities (301-331) allocated to the building block (201-209), and a number of results being attainable by said set of activities (301-331),
providing (S2) a software tool (T) including a network (2) with N3 nodes, with N3=N1+N2, each of the N3 nodes representing one of the N1 building blocks (201-209) or one of the N2 activities (301-331), wherein a number of activities (301-331) being allocated to at least two different building blocks (201-209) are connected by a number of edges in the network (2), and
applying (S3) the provided software tool (T) in the lifecycle process (1) of the product (P) for generating at least one signal (S) being adapted for adapting the product (P) and/or the lifecycle process (1) of the product.

2. The computer-implemented method of claim 1,
wherein the network (2) has a tree topology, wherein the nodes representing the N1 building blocks (201-209) are arranged at an upper level (L2) in the tree and the N2 activities (301-331) are arranged at a lower level (L3) in the tree.

3. The computer-implemented method of claim 1 or 2,
wherein the lifecycle process (1) is an end-to-end lifecycle process, wherein the N1 building blocks (201-209) are allocated to different stages in the end-to-end lifecycle process (1).

4. The computer-implemented method of one of claims 1 to 3,
wherein the building block description of the respective building block (201-209) includes a target state for the building block (201-209), an information indicating consequences of no response, an indication for which stakeholders the building block (201-209) is a applicable for, preconditions, the activities (301-331) allocated to the building block (201-209), the number of results being attainable by the set of activities (301-331) allocated to the building block (201-209), a trigger for the building block (201-209), a deadline for the building block (201-209), and/or an information indicating a contribution and/or competences of the building block (201-209).

5. The computer-implemented method of one of claims 1 to 4,
wherein the lifecycle process (1) includes a lifecycle stream (60) and a realization stream (30), wherein each of the N1 building blocks (201-209) is allocated to the lifecycle stream (60) or to the realization stream (30).

6. The computer-implemented method of claim 5,
wherein the building blocks (201-209) allocated to the lifecycle stream (60) include a UX Research building block (201), a UX Analysis building block (202), a UX Framework building block (203), a User Behaviour building block (208), and a UX Strategy building block (207), and/or the building blocks (201-209) allocated to the realization stream (30) include a UX Concept building block (204), a UX Specification building block (206), a UX Evaluation building block (205), and a UX Management building block (209).

7. The computer-implemented method of claim 5 or 6,
wherein the respective building block (201-209) includes a first indication for UX Competence Cluster, a second indication for UX Role and a third indication for UX Competence.

8. The computer-implemented method of claim 7,
wherein the UX Research building block (201) includes as allocated activities an activity to explore context of use (301), an activity to perform UX Research (302), and an activity to perform data analysis (303),
wherein the UX Analysis building block (202) includes as allocated activities an activity to analyze stakeholder needs (304), an activity to transfer stakeholder needs to team (305), an activity to perform process analysis (306), an activity to prioritize stakeholder needs (307) and an activity to provide insights (308),
wherein the Generic UX Framework building block (203) includes as allocated activities an activity to create holistic UX Concepts (309), an activity to create concept representations (310), and an activity to define and adapt frameworks (311),
wherein the UX Concept building block (204) includes as allocated activities an activity to create concepts (312), an activity to define flowcharts (313), an activity to detail concepts (314), and an activity to perform high level prototyping (315),
wherein the UX Evaluation building block (205) includes an activity to perform concept evaluation (316), an activity to execute UX tests (320), an activity to execute user acceptance tests (321) and an activity to perform expert evaluations (324),
wherein the UX specification building block (206) includes as allocated activities an activity to specify Ul designs (317), an activity to perform prototyping (318), and an activity to communicate UX designs and solutions (319),
wherein the UX strategy building block (207) includes as allocated activities an activity to define UX visions (322), an activity to define goals and measures (323), and an activity to plan and monitor UX roadmaps (325),
wherein the User Behaviour building block (208) includes as allocated activities an activity to track user behaviour (326), an activity to evaluate offering (327), and an activity to evaluate user feedback (328), and/or
wherein the UX management building block (209) includes as allocated activities an activity to select a UX team (329), an activity to plan UX (330) and an activity to monitor and evaluate UX (331).

9. The computer-implemented method of claim 8,
wherein the activity to analyze stakeholder needs (304) of the UX analysis building block (202) uses the output of the activity to perform data analysis (303) of the UX research building block (201),
wherein the activity to create concepts (312) of the UX concept building block (204) uses the output of the activity to provide insights (308) of the UX analysis building block (202) and the output of the activity to define and adapt frameworks (311) of the Generic UX Framework building block (203),
wherein the activity to perform concept evaluation (316) of the UX Evaluation building block (205) uses the output of the activity to perform high level prototyping (315) of the UX Concept building block (204),
wherein the activity to specify UI designs (317) and the activity to perform prototyping (318) of the UX specification building block (206) both use the output of the activity to perform high level prototyping (315) of the UX Concept building block (204),
wherein the activity to execute UX tests (320) and the activity to execute user acceptance tests (321) of the UX Evaluation building block (205) both use the output of the activity to communicate UX designs and solutions (319) of the UX Specification building block (206), wherein the activity to define UX visions (322) of the UX Strategy building block (207) uses the output of the activity to perform data analysis (303) of the UX Research building block (201), wherein the activity to perform expert evaluation (324) of the UX Evaluation building block (205) uses the output of the activity to perform high level prototyping (315) of the UX Concept building block (204),
wherein the activity to evaluate user feedback (328) of the User Behaviour building block (208) uses the output of the activity to perform expert evaluation (324) of the UX Evaluation building block (205), and the output of the activity to evaluate offering (327) of the User Behaviour building block (208).

10. The computer-implemented method of one of claims 1 to 9, further comprising manufacturing (S4) the product (P) using the signal (S) generated by the software tool (T).

11. The computer-implemented method of one of claims 1 to 10,
wherein the lifecycle process (1) includes
an input stage (10) for receiving inputs (11-18) related to the product (P),
a consecutive selection stage (20) for selecting demands from the received inputs (11-18),
a consecutive stage (30) for the realization stream for producing the product (P),
a consecutive output stage (40) for delivering the product (P), and
a feedback branch (50) coupling the output stage (40) with the input stage (10),
said stages (10-40) and the feedback branch (50) being based on the lifecycle stream (1), wherein the UX Analysis building block (202) is allocated to the selection stage (20), wherein the UX Concept building block (204), the UX Evaluation building block (205), the UX Specification block (206) and the UX Management building block (209) are allocated to the realization stream (30), wherein the UX Research building block (201) and the User Behaviour building block (208) are allocated to the feedback branch (50), and wherein the Generic UX Framework building block (203) and the UX Strategy building block (207) are allocated to the lifecycle stream (60).

12. A computer program product comprising a program code for executing the computer-implemented method according to any one of the claims 1 to 11 when run on at least one computer.

13. A computer readable medium on which program code sections of a computer program are saved, the program code sections being loadable into and/or executable in a system to make the system execute the method steps according to any one of the claims 1 to 11 when the program code sections are executed in the system.

14. A computer-implemented device (400) for producing a product (P) by a lifecycle process (1) using User Experience, UX, the computer-implemented device (500) comprising:
a first unit (410) for providing a plurality N1 of building blocks (201-209) and a plurality N2 of activities (301-331), each of the activities (301-331) being related to a certain aspect of the UX related to the product (P), the respective building block (201-209) being defined by a building block description, the respective building block description at least including a target state of the building block (201-209), a set of the N2 activities (301-331) allocated to the building block (201-209), and a number of results being attainable by said set of activities (301-331),
a second unit (420) for providing a software tool (T) including a network (2) with N3 nodes, with N3=N1+N2, each of the N3 nodes representing one of the N1 building blocks (201-209) or one of the N2 activities (301-331), wherein a number of activities (301-331) being allocated to at least two different building blocks (201-209) are connected by a number of edges in the network (2), and
a third unit (430) for applying the provided software tool (T) in the lifecycle process (1) of the product (P) for generating at least one signal (S) being adapted for adapting the product (P) and/or the lifecycle process (1) of the product (P).
